# EUROPEAN PATENT APPLICATION

(11) **EP 3 181 611 A1**
(43) Date of publication of application: **21.06.2017**
(21) Application number: 15201189.6
(22) Date of filing: 18.12.2015
(51) Int. Cl.: C08G 69/28

(54) **AN ALICYCLIC DI-AMMONIUM DI-CARBOXYLATE SALT**

(71) Applicant: Nexam Chemical AB, 223 63 Lund (SE)
(72) Inventor: Röme, Daniel, 226 51 Lund (SE); Momcilovic, Dane, 226 51 LUND (SE); Solano, Carlos, 224 72 Lund (SE); Lager, Erik, 226 51 Lund (SE); Roff, Geoffrey John, Fife, Scotland, KY15 4GY (GB); Milne, David Neil, Angus, Scotland, DD5 3UY (GB); Gordon Pepper, Adrian, Fife, Scotland, KY15 5RU (GB)
(74) Representative: Ström & Gulliksson AB

(57) **Abstract**

An alicyclic di-ammonium di-carboxylate salt of an alicyclic di-amine and a carboxylic acid is disclosed. The carboxylic acid is selected from the group consisting of formic acid, acetic acid, propionic acid, and butyric acid, whereas the alicyclic di-amine may be selected from the group consisting of diaminocyclohexane, bis(aminomethyl)cyclohexane, bis(aminomethyl)norbornane, 1,3-diaminoadamantane, 5-amino-1,3,3-trimethylcyclohexanemethylamine, methylenebis(cyclohexylamine), diaminodecalin, and 1,4-diaminocubane.

## Description

### FIELD OF THE INVENTION

The present invention relates to di-amino monomers for use in polymerization to obtain polyimides.

### BACKGROUND

Aromatic polyimides are high-end polymers. They are polymers comprising imide bonds, typically formed by the condensation reaction of an amino group and a carboxylic anhydride, e.g. condensation of aromatic carboxylic acid dianhydride monomers and aromatic diamine monomers. Aromatic polyimides are lightweight and flexible materials, with high thermal and chemical stability. Aromatic polyimides however suffer from strong absorption in the visible region and enhanced dielectric constants, limiting their use in optoelectronics and interlayer dielectric materials.

Semi-aromatic polyimides comprise another class of polyimides. Semi-aromatic polyimides are fairly easily prepared from aromatic diamines and alicyclic tetracarboxylic dianhydrides. However, the syntheseses of semi-aromatic polyimides from aromatic tetracarboxylic dianhydrides and aliphatic or alicyclic diamines are more challenging. The carboxylic acid moieties of the poly(amic acids), obtained during polymerization, form salts or gels with aliphatic and alicyclic diamines. In working with aromatic diamines the interaction between the poly(amic acids) and the diamines is not a significant problem, as the basicity of aromatic diamines is significantly lower compared to that of aliphatic or alicyclic diamines. The salt formation and gelation prevents the formation of high molecular weight poly(amic acids) comprising aliphatic and alicyclic diamine monomers (cf. High Performance Polymers 15: 47, 2003).

Several techniques involving a high temperature polymerization (High Performance Polymers, 13: S93; 2001) and *N*-silylation method (Macromolecules 35: 2277; 2002) have been reported to prevent the formation of salt in the synthesis of poly(amic acids). However, the high temperature polymerization technique is not versatile, and in the latter case the silyl residues usually remain in the final compounds, limiting this method for manufacture of materials suitable for electronic applications. A different approach to avoid the salt formation is the use of tetracarboxylic acid dialkyl ester dichlorides (High Perform. Polym. 10 11) but this methodology can lead to trace amounts of unfavorable residues such as chlorine components. Further, addition of carboxylic acids to aliphatic or alicyclic diamines in solution and subsequent addition of aromatic tetracarboxylic dianhydrides has been reported to effectively yield high molecular weight poly(amic acids) (cf. Macromolecules 40: 3527; 2007 and US 2009/00822543).

Semi-aromatic polyimides are of interest as the incorporation of aliphatic monomers in the polyimide backbone has been proved as asuccessful approach to enhance optical transmittance, i.e. less color, and to lower the dielectric constants compared to conventional fully aromatic polyimides. They are thus more suitable for use in, e.g. applications as optoelectronics and interlayer dielectric materials. Polyimide optical films with high thermal resistance are highly desired due to the ever increasing demands for high reliability, high integration, and high signal transmission speed in optoelectronic devices.

Many present and future applications of optical films demand for combinations of properties which may not be available from the commodity materials. One of the most challenging topics is the balance between high-temperature stability, optical transparency, and other properties, such as mechanical properties, and dielectric characteristics. Methodologies for increasing the thermal resistance of optical films, including introduction of rigid and highly conjugated substituents, usually deteriorate their optical transparencies and dielectric constants (J. Ind. Eng. Chem., 28, 16-27, 2015). However, *trans*-1,4-cyclohexanediamine combines its alicyclic nature with a stiff and linear structure, and its use as co-monomer results in semi-aromatic polyimides that benefit not just from improved transparencies and reduced dielectric constants, but also from lower coefficients of thermal expansion and higher glass transition temperatures.

While semi-aromatic polyimides have superior colorless transparency compared to aromatic ones, they still suffer from problems with discoloration. Semi-aromatic polyimides comprising aliphatic di-amine monomers are inherently prone to discolor. In order to overcome this deficiency, the aliphatic di-amine monomers typically are purified, e.g. re-crystallized, shortly before polymerization. While this, at least partly, alleviates problems with discoloration, it adds an extra production step and reduces the yield. Further, some problems with discoloration still remain. Given the low melting point of common aliphatic di-amine monomers, e.g. *trans*-1,4-cyclohexanediamine, re-crystallization is demanding and typically requires repeated recrystallizations. Furthermore, it may be difficult to remove all solvent, especially polar solvents, from the re-crystallized aliphatic di-amine due its low melting point. It would thus be desired to provide means for further reducing the problems with discoloration.

### SUMMARY

Consequently, the present invention seeks to mitigate, alleviate, eliminate or circumvent one or more of the above identified deficiencies in the art and disadvantages singly or in any combination by providing an alicyclic di-ammonium di-carboxylate salt of an alicyclic di-amine and a carboxylic acid. The carboxylic acid is selected from the group consisting of formic acid, acetic acid, propionic acid, and butyric acid. The alicyclic di-amine may be selected from the group consisting of diaminocyclohexane, e.g. 1,4-diaminocyclohexane or 1,3-diaminocyclohexane, bis(aminomethyl)cyclohexane, e.g. 1,4-bis(aminomethyl)cyclohexane or 1,3-bis(aminomethyl)cyclohexane, bis(aminomethyl)norbornane, 1,3-diaminoadamantane, 5-amino-1,3,3-trimethylcyclohexanemethylamine, methylenebis(cyclohexylamine), e.g. 4,4'-methylenebis(cyclohexylamine), 4,3'-methylenebis(cyclohexylamine), or 3,3'-methylenebis(cyclohexylamine), diaminodecalin, and 1,4-diaminocubane, such as from 1,4-diaminocyclohexane, 1,3-diaminocyclohexane, 1,4-bis(aminomethyl)cyclohexane, 1,3-bis(aminomethyl)cyclohexane, 5-amino-1,3,3-trimethylcyclohexanemethylamine, 4,4'-methylenebis(cyclohexylamine), 4,3'-methylenebis(cyclohexylamine), and 3,3'-methylenebis(cyclohexylamine). Preferably, the di-carboxylate salt is cyclohexane-*trans*-1,4-diammonium diacetate.

Another aspect of the invention relates to use of the present di-carboxylate salt in the synthesis of a semi-aromatic poly(amic acid).

Similarly, another aspect of the invention relates to a method for synthesizing a semi-aromatic poly(amic acid). The method comprises the step of reacting the present di-carboxylate salt with an aromatic tetracarboxylic dianhydride.

Still another aspect relates to a method for synthesizing a semi-aromatic polyimide. The method comprises the step of:
- providing a semi-aromatic poly(amic acid) according to the present method of synthesizing a semi-aromatic poly(amic acid); and
- de-hydrating the semi-aromatic poly(amic acid) to provide a semi-aromatic polyimide.

Further advantageous features of the invention are elaborated in embodiments disclosed herein.

### Brief description of the drawings

These and other aspects, features and advantages of which the invention is capable of will be apparent and elucidated from the following description of the embodiments of the present invention, reference being made to the accompanying drawings, in which:
**Fig. 1** depicts the UV-Vis spectra of *trans*-1,4-diaminocyclohexane as received, *trans*-1,4-diaminocyclohexane recrystallized from hexane and *trans*-1,4-diammoniumcyclohexane diacetate dissolved in water (100 mM); and
**Fig. 2** depicts the UV-Vis spectra of the poly(amic acids) obtained from the condensation reaction between *trans*-1,4-diaminocyclohexane as received, *trans*-1,4-diaminocyclohexane re-crystallized from hexane and *trans*-1,4-diammoniumcyclohexane diacetate, respectively, and 3,3',4,4'-Biphenyltetracarboxylic dianhydride (BPDA).

### DETAILED DESCRIPTION

The present inventors surprisingly found that the discoloration of semi-aromatic polyimides comprising alicyclic di-amine monomers may be further reduced by use of a alicyclic di-ammonium di-carboxylate salt, instead of the free alicyclic di-amine, in synthesizing poly(amic acids) to be de-hydrated to polyimides. Further, use of alicyclic di-ammonium di-carboxylate salt was interestingly found to not have any effect of the yield of high molecular weight poly(amic acids). Further, the need to purify, e.g. re-crystallize, the di-amine before use could be dispensed with. Avoiding the need for tedious re-crystallization of the di-amine monomer in producing clear semi-aromatic polyimides is advantageous.

Thus, an embodiment relates to an alicyclic di-ammonium di-carboxylate salt of an alicyclic di-amine and a carboxylic acid. The carboxylic acid is selected from the group consisting of formic acid, acetic acid, propionic acid, and butyric acid. The corresponding carboxylate is thus formate, acetate, propionate, and butyrate, respectively. As too weak an acid will not be able to fully protonate the alicyclic di-amine, whereas too strong an acid will form to strong ion-pairs with the di-amine, the corresponding carboxylic acid should have a pKa in the range of about 3 to 5. Further, the carboxylic acid should be fairly volatile in order to be easily removed upon dehydrating the poly(amic acids) to the corresponding polyimide. Acetate represents a preferred carboxylate. Thus, the alicyclic di-ammonium di-carboxylate salt may be a diacetate salt of an alicyclic di-amine.

As used herein, alicyclic di-ammonium di-carboxylate salts relates to the following type of salts:

(R₁C(O)O⁻)₂(H₃N⁺-R₂-NH₃⁺)

wherein R₁ is hydrogen, methyl, ethyl, or propyl, and R₂ is a alicyclic hydrocarbon di-radical.

According to an embodiment, the alicyclic di-amine is selected from the group consisting of diaminocyclohexane, e.g. 1,4-diaminocyclohexane or 1,3-diaminocyclohexane, bis(aminomethyl)cyclohexane, e.g. 1,4-bis(aminomethyl)cyclohexane or 1,3-bis(aminomethyl)cyclohexane, bis(aminomethyl)norbornane, 1,3-diaminoadamantane, 5-amino-1,3,3-trimethylcyclohexanemethylamine, methylenebis(cyclohexylamine), e.g. 4,4'-methylenebis(cyclohexylamine), 4,3'-methylenebis(cyclohexylamine), or 3,3'-methylenebis(cyclohexylamine), diaminodecalin, and 1,4-diaminocubane, such as from 1,4-diaminocyclohexane ,1,3-diaminocyclohexane, 1,4-bis(aminomethyl)cyclohexane, 1,3-bis(aminomethyl)cyclohexane, 5-amino-1,3,3-trimethylcyclohexanemethylamine, 4,4'-methylenebis(cyclohexylamine), 4,3'-methylenebis(cyclohexylamine), and 3,3'-methylenebis(cyclohexylamine). Preferably the alicyclic di-amine is 1,4-diaminocyclohexane and even more preferably *trans*-1,4-diaminocyclohexane.

According to a preferred embodiment the di-carboxylate salt is *trans*-1,4-diammoniumcyclohexane diacetate. *Trans*-1,4-diammoniumcyclohexane- diacetate is a salt according the structural formula depicted below.

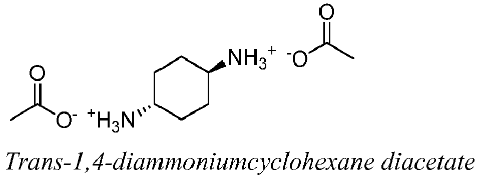

Further, also di-carboxylate salts of aliphatic di-amines, such as 2,2,4-trimethyl-1,6-hexanediamine, ethylenediamine, 1,4-diaminobutane, 1,6-diaminohexane, and 1,8-diaminooctane, may be provided for the synthesis of semi-aromatic polyimides. The present invention however relates to di-carboxylate salts of alicyclic di-amines.

The present alicyclic di-ammonium di-carboxylate salts may be obtained by reacting a free alicyclic di-amine with a carboxylic acid. Typically, the obtained alicyclic di-ammonium di-carboxylate will crystallize as a salt. The reaction may either be performed using the carboxylic acid as solvent (e.g. > 10 molar equivalents of the carboxylic acid) or in the presence of one or more solvents. If using other solvents, only slight excess (e.g. about 2.1 molar equivalents) of the carboxylic acid may be used.

As already described, the alicyclic di-ammonium di-carboxylate salts are useful in the synthesis of a semi-aromatic poly(amic acids). A further embodiment thus relates to the use of the alicyclic di-ammonium di-carboxylate salt disclosed herein in the synthesis of a semi-aromatic poly(amic acid). The resulting poly(amic acids) may be dehydrated to provide semi-aromatic polyimides. Further, the present alicyclic di-ammonium di-carboxylate salt may also be used in the synthesis of a aliphatic poly(amic acids). The aliphatic poly(amic acid) may be dehydrated to provide an aliphatic polyimide.

An even further embodiment relates to a method for synthesizing a semi-aromatic poly(amic acid). The method comprises the step of reacting the alicyclic di-ammonium di-carboxylate salt disclosed herein with an aromatic tetracarboxylic dianhydride to provide a semi-aromatic poly(amic acid). Typically the monomers are reacted in a solvent. The method may thus comprise the steps of:
- suspending or dissolving the di-carboxylate salt in a solvent; and
- adding the aromatic tetracarboxylic dianhydride to the suspension or solution comprising the di-carboxylate.

Examples of suitable solvents are known to the skilled person and include aprotic polar solvents and specifically, *N,N*-dimethylacetamide (DMAC), dimethyformamide (DMF), *N*-methyl-2-pyrrolidone (NMP), gamma-butyrolactone (GBL), and 1,3-dimethyl-2-imidazolidinone (DMI). These can be used as independent or mixed stock.

Also aromatic tetracarboxylic dianhydrides to be used to provide semi-aromatic poly(amic acid) are known to the skilled person. Examples include aromatic tetracarboxylic dianhydrides selected from the group consisting of: 3,3',4,4'-biphenyltetracarboxylic dianhydride (BPDA), pyromellitic dianhydride (PMDA), 3,3',4,4'-benzophenone tetracarboxylic dianhydride (BTDA), 4,4'-oxydiphthalic anhydride (ODPA), 4,4'-(hexafluoroisopropylidene)diphthalic anhydride (6FDA), and 3,3',4,4'-diphenylsulfone tetracarboxylic dianhydride (DSDA)

The thus obtained, semi-aromatic poly(amic acid) may be dehydrated to provide a semi-aromatic polyimide. An embodiment thus relates to a method for providing a semi-aromatic polyimide. Such a method will comprise:
- reacting the alicyclic di-ammonium di-carboxylate salt disclosed herein with an aromatic tetracarboxylic dianhydride to provide a semi-aromatic poly(amic acid); and
- dehydrating the semi-aromatic poly(amic acid) to provide a semi-aromatic polyimide.

Semi-aromatic polyimide provided by use of the present di-carboxylate salts will have no or only faint color. Thus, they are useful in optoelectronics and interlayer dielectric materials.

Without further elaboration, it is believed that one skilled in the art may, using the preceding description, utilize the present invention to its fullest extent. The preceding preferred specific embodiments are, therefore, to be construed as merely illustrative and not limitative of the disclosure in any way whatsoever.

Although the present invention has been described above with reference to specific embodiments, it is not intended to be limited to the specific form set forth herein. Rather, the invention is limited only by the accompanying claims and, other embodiments than the specific above are equally possible within the scope of these appended claims, e.g. different than those described above.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous.

In addition, singular references do not exclude a plurality. The terms "a", "an", "first", "second" etc. do not preclude a plurality.

### EXPERIMENTAL

The following examples are mere examples and should by no means be interpreted to limit the scope of the invention. Rather, the invention is limited only by the accompanying claims.

### Trans-1,4-diammoniumcyclohexane diacetate

*Trans*-1,4-diaminocyclohexane (20.0 g, 0.175 mol, supplied by Acros) was added portion-wise to acetic acid (149.6 g, 2.49 mol) allowing the temperature to rise and stabilize between each addition. Upon completion of addition the mixture was heated until full dissolution occurred (about 100 °C). The mixture was held at this temperature for 15 minutes and then allowed to cool down to ambient temperature. The resulting solid was collected by filtration and washed with industrial denatured alcohol (ethanol) (3 x 23 mL). After drying under vacuum at 120 °C, a white solid (36.5 g, 0.156 mol, 89.0%) was obtained.

¹H NMR (500 MHz, D₂O): δ 1.32-1.42 (m, 4H), 1.74-1.77 (m, 6H, C*H*₃CO₂⁻), 1.96-2.06 (m, 4H), 3.03-3.12 (m, 2H, C*H*NH₃⁺)

A sample of the obtained solid was heated at atmospheric pressure, but no melting was observed. However, the sample seemingly started to sublimate at approx. 155°C.

### Trans-1,4-diaminocyclohexane

*Trans*-1,4-diaminocyclohexane (40.0 g, 0.35 mol, supplied by Acros) was used either directly as supplied by commercial suppliers or re-crystallized (cf. Macromolecules 40: 3527; 2007) from hexanes (56 mL) before being used. It was noted that during the heat-up period a dark brown oil separated from the solution and adhered to the edge of the flask. The crystallized solid was collected by filtration and washed with hexane (2 x 10 mL). After drying under vacuum at ambient temperature a pale brown solid (35.0 g, 0.306 mol, 87.5%) was obtained.

### Polymerization

### Polymerization according to the art

*Trans*-1,4-diaminocyclohexane (8.4 g, 0.0735 mol, supplied by Acros), neat or re-crystallized (cf. above), respectively, was added to dimethylacetamide (210 mL, supplied by Alfa Aesar A10924) under nitrogen and the mixture stirred until a solution formed. Acetic acid (9.7 g, 0.162 mol) was added slowly and the resulting suspension stirred for at least 10 minutes whilst adjusting the temperature to approx. 20 °C. 3,3',4,4'-Biphenyltetracarboxylic dianhydride (BPDA) (21.6 g, 0.0735 mol) was added in one portion (**Note:** *the rate of agitation needed to be increased briefly as the solid BPDA sat on the surface of the trans-1,4-cyclohexanediamine salt suspension*). The resulting mixture was stirred at 20 °C. The mixture began to clarify after approx. 15 minutes. After 30 minutes there was only a little solid remaining.

Viscosity measurements (3 g/dL dilution) were performed after 2, 6, and 24 hours (cf. below).

### Polymerization according to the invention

*Trans*-1,4-diammoniumcyclohexane diacetate (17.2 g, 0.0735 mol) was added to dimethylacetamide (210 mL). The resulting suspension was stirred for at least 10 minutes whilst adjusting the temperature to approx. 20 °C. 3,3',4,4'-Biphenyltetracarboxylic dianhydride (BPDA) (21.6 g, 0.0735 mol) was added in one portion (**Note:** *the trans-1,4-diamoniumcyclohexane diacetate suspension was not a thick mixture and the BPDA dispensed readily into the mixture*). The resulting mixture was stirred at 20 °C. The mixture began to clarify after approx. 60 minutes. The longer time needed to clarify is probably due to the form (surface area) of the salt.

Viscosity measurements (3 g/dL dilution) were performed after 2, 6, and 24 hours (cf. below).

### Results

The viscosity of the mixtures comprising the poly(amic acids)-was measured on a PCE-RVI-1 Analogue Rotational Viscometer. A portion of the reaction mixture was diluted to a concentration of 3 g/dL with *N,N*-dimethylacetamide and the viscosity was measured at 30°C.

**Table 1 - Inherent viscosity of reaction mixtures after 2, 6, and 24 hours**

| **Sample** | **Inherent viscosity (dl/g)** | | |
|---|---|---|---|
| | **2 hours** | **6 hours** | **24 hours** |
| Neat Amine | 0.96 | 0.93 | 0.89 |
| Re-crystallized amine | 0.90 | 1.01 | 0.93 |
| Diacetate salt | 0.88 | 0.85 | 0.91 |

As can be seen from Table 1, the use of *trans*-1,4-diammoniumcyclohexane diacetate resulted in an inherent viscosity insignificantly different to that obtained by using methods of the art. It could thus be confirmed that *trans*-1,4-diammoniumcyclohexane diacetate indeed could be used as starting material without negatively affecting the ultimate degree of polymerization

Further, it was surprisingly found, based on visual inspection of the reactions solutions, that the semi-aromatic poly(amic acid) resulting from use of *trans*-1,4-diammoniumcyclohexane diacetate was less colored than the corresponding semi-aromatic poly(amic acid) obtained from re-crystallized *trans*-1,4-diaminocyclohexane. Also polyimide films prepared from the semi-aromatic poly(amic acids) differed in color.

The color difference was further quantified by UV/vis spectroscopy. The UV/vis measurements were performed on a Perkin Elmer Lambda 35 UV/VIS Spectrometer (courtesy of the University of St. Andrews) using quartz cuvettes with a 1 cm path length. The analyses of the unreacted amine were performed at a concentration of 100 mM in water. The analysis of the polymerization reactions were performed on the solutions used for the viscosity measurements at approx. 73 mM.

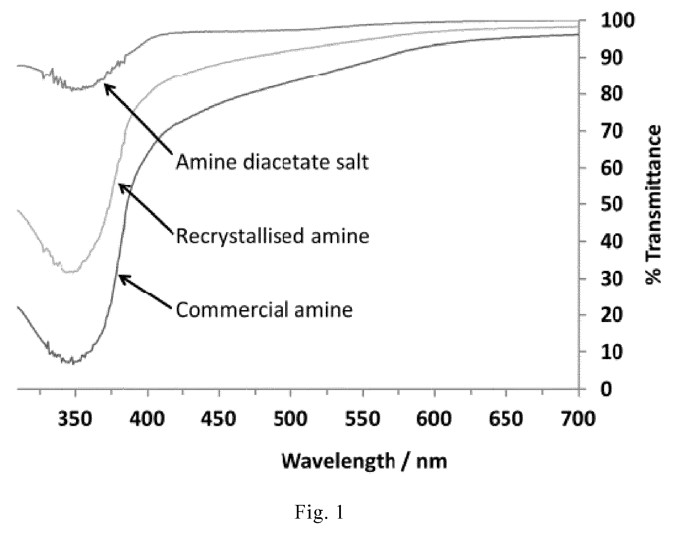

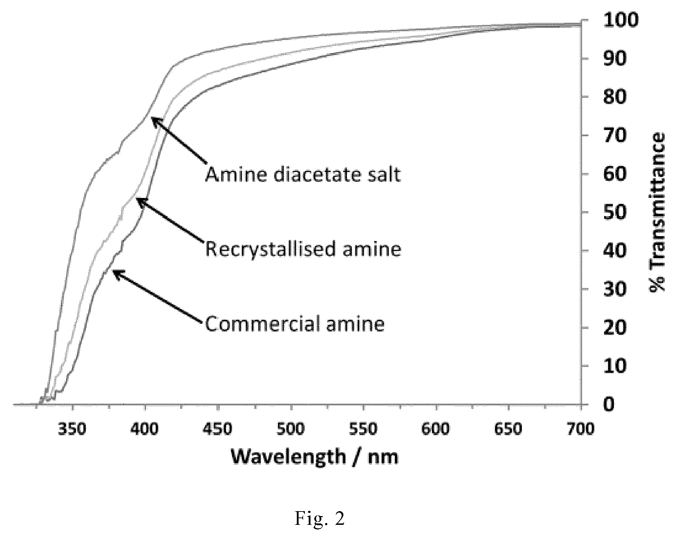

As can be seen from Fig. 2, using *trans*-1,4-diammoniumcyclohexane diacetate, instead of commercial *trans*-1,4-diaminocyclohexane or recrystallized *trans-*1,4-diaminocyclohexane, provides a more transparent, i.e. a less colored, reaction mixture, although the product, i.e. the semi-aromatic poly(amic acid), is the same. The color difference is even more apparent from Fig. 1, depicting the transmittance of aqueous solutions of the di-amines.

## Claims

1. An alicyclic di-ammonium di-carboxylate salt of an alicyclic di-amine and a carboxylic acid, wherein said carboxylic acid is selected from the group consisting of formic acid, acetic acid, propionic acid, and butyric acid.

2. The di-carboxylate salt according to claim 1, wherein said alicyclic di-amine is selected from the group consisting of diaminocyclohexane, e.g. 1,4-diaminocyclohexane or 1,3-diaminocyclohexane, bis(aminomethyl)cyclohexane, e.g. 1,4-bis(aminomethyl)cyclohexane or 1,3-bis(aminomethyl)cyclohexane, bis(aminomethyl)norbornane, 1,3-diaminoadamantane, 5-amino-1,3,3-trimethylcyclohexanemethylamine, methylenebis(cyclohexylamine), e.g. 4,4'-methylenebis(cyclohexylamine), 4,3'-methylenebis(cyclohexylamine), or 3,3'-methylenebis(cyclohexylamine), diaminodecalin, and 1,4-diaminocubane, such as from 1,4-diaminocyclohexane, 1,3-diaminocyclohexane, 1,4-bis(aminomethyl)cyclohexane, 1,3-bis(aminomethyl)cyclohexane, 5-amino-1,3,3-trimethylcyclohexanemethylamine, 4,4'-methylenebis(cyclohexylamine), 4,3'-methylenebis(cyclohexylamine), and 3,3'-methylenebis(cyclohexylamine).

3. The di-carboxylate salt according to claim 2, wherein said alicyclic di-amine is 1,4-diaminocyclohexane; preferably *trans*-1,4-diaminocyclohexane.

4. The di-carboxylate salt according to any one of the claims 1 to 3, wherein said carboxylic acid is acetic acid.

5. The di-carboxylate salt according to claim 3, wherein said di-carboxylate salt is *trans*-1,4-diammoniumcyclohexane diacetate.

6. Use of the di-carboxylate salt according to any one of the claims 1 to 5 in the synthesis of a semi-aromatic poly(amic acid).

7. A method for synthesizing a semi-aromatic poly(amic acid), said method comprising the step of:
- reacting a di-carboxylate salt according to any one of the claims 1 to 5 with an aromatic tetracarboxylic dianhydride.

8. The method to claim 7, comprising the steps of:
- suspending or dissolving the di-carboxylate salt according to any one of the claims 1 to 5 in a solvent; and
- adding the aromatic tetracarboxylic dianhydride to the suspension or solution comprising the di-carboxylate.

9. The method according to claim 7 or 8, wherein said aromatic tetracarboxylic dianhydride is selected from the group consisting of: 3,3',4,4'-biphenyltetracarboxylic dianhydride (BPDA), pyromellitic dianhydride (PMDA), 3,3',4,4'-benzophenone tetracarboxylic dianhydride (BTDA), 4,4'-oxydiphthalic anhydride (ODPA), 4,4'-(hexafluoroisopropylidene)diphthalic anhydride (6FDA), and 3,3',4,4'-diphenylsulfone tetracarboxylic dianhydride (DSDA).

10. A method for synthesizing a semi-aromatic polyimide, said method comprising the steps of:
- providing a semi-aromatic poly(amic acid) according to any one of the claims 7 to 9; and
- de-hydrating the semi-aromatic poly(amic acid) to provide a semi-aromatic polyimide.
